# EUROPÄISCHE PATENTSCHRIFT

(11) **EP 4 109 866 B1**
(45) Veröffentlichungstag und Bekanntmachung des Hinweises auf die Patenterteilung: **20.03.2024**
(21) Anmeldenummer: 21211961.4
(22) Anmeldetag: 02.12.2021
(51) Int. Cl.: H04N 1/00, H04N 1/04, H04N 1/333, H04N 1/387

(54) **VERFAHREN ZUM SCANNEN VON VORLAGEN**
TEMPLATE SCANNING METHOD
PROCÉDÉ DE NUMÉRISATION DE DOCUMENTS

(30) Priorität: 21.06.2021 DE 102021115924
(43) Veröffentlichungstag der Anmeldung: 28.12.2022
(73) Patentinhaber: LaserSoft Imaging AG, 24105 Kiel (DE)
(72) Erfinder: Zahorsky, Karl-Heinz, 24105 Kiel (DE)
(74) Vertreter: Eisenführ Speiser

(56) Entgegenhaltungen:
- EP-A1- 2 096 854
- US-A1- 2004 212 852
- US-B1- 6 301 398

## Beschreibung

Die Erfindung betrifft ein Verfahren zum Scannen von Vorlagen unter Verwendung eines Scanners, wie bspw. eines Flachbettscanners. Bei Vorlagen kann es sich bspw. um Fotos, Bilder, Texte und/oder in Rahmen befindliche Dias oder Kleinbilddias handeln.

Derartige Verfahren sind aus dem Stand der Technik bekannt. So ist bspw. im Stand der Technik ein Scannen mit Hilfe eines Flachbettscanners 12000XL von Epson bekannt geworden, mit dem von 30 Kleinbilddias Bilddaten bei einer Auflösung von 2400 dpi in ungefähr einer Stunde gescannt werden können, wobei in dieser Zeit auch Multiexposure-Bilddaten gescannt wurden. Auch ist im Stand der Technik ein Scannen mit Hilfe eines Flachbettscanners vom Typ Epson V800/V850 bekannt geworden, bei dem in einfachen Farb-Scans von 12 Kleinbilddias Bilddaten bei einer Auflösung von 2400 dpi in etwa 7 Minuten erfasst werden konnten. Die EP 2 096 854 A1 beschreibt einen weiteren Stand der Technik. Aufgabe der vorliegenden Erfindung ist es, Verfahren der eingangs genannten Art zu verbessern, insbesondere die Zeit zum Einscannen von Vorlagen unter Verwendung von Scannern zu reduzieren.

Diese Aufgabe wird durch ein Verfahren gemäß Anspruch 1 gelöst.

Bevorzugte Ausführungsformen der Erfindung sind in den Unteransprüchen angegeben.

Die vorliegende Erfindung umfasst die Erkenntnis, dass Scanner bei einem Scanvorgang stets die gesamte Breite des Scanbetts erfassen. Dies hat zur Folge, dass Bilddaten der zu scannenden Vorlage, die bei einem bestimmten Scan erfasst werden, häufig Bilddaten einer anderen Vorlage, die bei einem späteren Scan erneut erfasst wird, beinhalten. Dies ist insbesondere bei einem vollbelegten Scanbett der Fall. Andererseits hat die Erfindung erkannt, dass gerade ein vollbelegtes Scanbett vorteilhaft zur Reduzierung der Gesamtzeit aller Scanvorgänge ist. In diesem Zusammenhang hat die Erfindung nun insbesondere erkannt, dass bei Scannern, insbesondere bei Flachbildscannern, der Scanvorgang beschleunigt werden kann, wenn man sich zu Nutze macht, dass insbesondere in Bezug auf die Breite größere Bereiche gescannt werden, d.h. mehrere über die Breite des Scannbetts verteilt liegende Vorlagen in einem Scanvorgang gescannt werden. Somit nutzt die vorliegende Erfindung das ohnehin vorhandene Scannen der gesamten Breite des Scannbetts durch die üblichen Scanner, wie etwa Flachbettscanner, um einen möglichst breiten Bereich mit mehreren Bildern in diesem Bereich gleichzeitig in einem Scanvorgang zu scannen.

Durch die vorliegende Erfindung kommt es daher zu einer enormen Beschleunigung des gesamten Scanvorganges. So wurde bei einer Verprobung der Erfindung festgestellt, dass bei einem erfindungsgemäßen Scannen von 30 Kleinbilddias mit Hilfe des Scanners Epson 12000XL Bilddaten bei einer Auflösung von 2400 dpi innerhalb von 25 bis 30 Minuten bei unveränderter Bildqualität gescannt werden können, wobei in dieser Zeit gleichzeitig auch Multi-Exposure-Bilddaten erfasst wurden. Bei einem einfachen Farb-Scan von 12 Kleinbilddias konnten Dank der Erfindung Bilddaten mit einer Auflösung von 2400 dpi in nur noch etwa 4,5 Minuten erfasst werden.

Das Scanbett ist bspw. das Flachbett eines Flachbettscanners.

Die vorliegende Offenbarung zeigt insbesondere ein erfindungsgemäßes Verfahren zum Scannen von Vorlagen unter Verwendung eines Scanners, bspw. eines Flachbettscanners, mit den Schritten: (i) Durchführen eines Vorab-Scans unter Verwendung eines eine Ausdehnung in x- und in y-Richtung aufweisenden Scanbetts des Scanners, zur Erfassung jeweils einer x-Erstreckung zwischen einem kleinsten und einem größten Erstreckungswert in x-Richtung und zur Erfassung jeweils einer y-Erstreckung zwischen einem kleinsten und einem größten Erstreckungswert in y-Richtung von auf dem Scanbett befindlichen Vorlagen, und Erstellen von den Vorlagen zugeordneten Scanrahmen aus den jeweils erfassten Erstreckungswerten, (ii) Festlegen des Scanrahmens mit der größten y-Erstreckung als Leitrahmen, (iii) Definieren derjenigen als Folgerahmen, die sich mit ihrer y-Erstreckung innerhalb eines Abschnittes des Scanbetts befinden, welcher Abschnitt in y-Richtung durch den kleinsten und den größten Erstreckungswert der y-Erstreckung des Leitrahmens aufgespannt wird, (iv) Erstellen eines Prozessierdatensatzes aus dem Abschnitt, seinem Leitrahmen und seinen Folgerahmen, (v) Eintragen dieses Prozessierdatensatzes in eine Liste von Prozessierdatensätzen, (vi) Durchführen der Schritte (ii) bis (v), ohne Berücksichtigung der bereits in einem Prozessierdatensatz befindlichen Scanrahmen, bis sich alle im Schritt (i) erfassten Scanrahmen in einem Prozessierdatensatz befinden, (vii) Erfassen von Bilddaten durch Scannen der Abschnitte der in der Liste eingetragenen Prozessierdatensätze, (viii) Ausschneiden von Vorlagenbilddaten aus den erfassten Bilddaten entlang der Scanrahmen, und (ix) Speichern der ausgeschnittenen Vorlagenbilddaten.

Das Erstellen der Scanrahmen in Schritt (i) ist in jeder Ausrichtung möglich. Somit ist es ebenfalls erfindungsgemäß, wenn Schritt (i) bspw. alternativ lautet:
(i) Durchführen eines Vorab-Scans unter Verwendung eines eine Ausdehnung in x- und in y-Richtung aufweisenden Scanbetts des Scanners, zur Erfassung jeweils einer y-Erstreckung zwischen einem kleinsten und einem größten Erstreckungswert in y-Richtung und zur Erfassung jeweils einer x-Erstreckung zwischen einem kleinsten und einem größten Erstreckungswert in x-Richtung von auf dem Scanbett befindlichen Vorlagen, und Erstellen von den Vorlagen zugeordneten Scanrahmen aus den jeweils erfassten Erstreckungswerten.

Die vorliegende Offenbarung zeigt auch und beansprucht eigenständigen Schutz für ein Computerprogramm mit Programmcodemitteln zum Ausführen der Schritte des erfindungsgemäßen Verfahrens, wenn das Computerprogramm auf einem Computer ausgeführt wird, für ein computerlesbares Medium mit einem solchen Computerprogramm, und für einen Scanner, ausgerüstet, insbesondere mit einem solchen Computerprogramm oder einem solchen computerlesbaren Medium, um das erfindungsgemäße Verfahren auszuführen.

Eine Ausführungsform der Erfindung zeichnet sich dadurch aus, dass zur Festlegung des Leitrahmens gemäß Schritt (ii) eine nach dem Ausmaß der y-Erstreckung sortierte Höhenliste der in Schritt (i) erstellten Scanrahmen erstellt wird. Hierdurch läßt sich einfach der Scanrahmen mit der größten y-Erstreckung als Leitrahmen festlegen.

Eine Ausführungsform der Erfindung zeichnet sich dadurch aus, dass zur Erstellung der Höhenliste ein Sortieralgorithmus verwendet wird, der jeweils pärchenweise die y-Erstreckungen zweier Scanrahmen vergleicht. Auf diese Weise läßt sich die Höhenliste besonders einfach erstellen.

Eine Ausführungsform der Erfindung zeichnet sich aus durch den Schritt des Begrenzens des Abschnittes in x-Richtung durch Grenzen des Scanbetts in x-Richtung. Dies stellt eine besonders einfache Realisation des Aufspannens des Abschnittes dar.

Eine Ausführungsform der Erfindung zeichnet sich aus durch den Schritt des Begrenzens des Abschnittes in x-Richtung, in dem unter den im Abschnitt befindlichen Folgerahmen der kleinste x- und der größte x-Wert der Erstreckungswerte erfasst wird und der Abschnitt in x-Richtung nur zwischen diesen beiden Werten aufgespannt wird. Da auf diese Weise der Abschnitt einen geringeren Anteil ohne Bildaten von zu erfassenden Vorlagen umfasst, wird durch diese Ausführungsform die vom Scanner zu verarbeitende Menge an Daten reduziert, wodurch die Verarbeitungsgeschwindigkeit des Scanners erhöht und auch im Scanner vorzuhaltender Speicherplatz eingespart wird.

Eine Ausführungsform der Erfindung zeichnet sich dadurch aus, dass zu mindestens einem der Scanrahmen zusätzlich mindestens ein weiterer Scanparameter erfasst oder, bspw. von einem Benutzer des Verfahrens, festgelegt wird, wobei es sich bei dem zusätzlich mindestens einen Scanparameter um die gewünschte Auflösung beim Erfassen von Bilddaten, um Metadaten der Vorlagen wie bspw. ein Datum oder Name der Vorlagen, um Filter und deren Einstellungen, und/oder dem Anfordern eines Multi-Exposure-Scans handeln kann. Auf diese Weise kann das erfindungsgemäße zeitsparende Scannen ganzer Abschnitte mit mehreren Vorlagen darin auch dann durchgeführt werden, wenn einer oder mehrere der Vorlagen in einem bestimmten Abschnitt weitere Scanparameter aufweisen. Denn diese ggf. vorhandenen weiteren Scanparameter bleiben der jeweiligen Vorlage zugeordnet.

Eine Ausführungsform der Erfindung zeichnet sich dadurch aus, dass das Scannen gemäß Schritt (vii) als Farb-Scannen durchgeführt wird. Das Farb-Scannen oder auch RGB-Scannen erfasst vorteilhaft auch die Farbinformationen der Vorlagen.

Eine Ausführungsform der Erfindung zeichnet sich dadurch aus, dass das Scannen gemäß Schritt (vii) gegebenenfalls unter Berücksichtigung des mindestens einen zusätzlichen Scanparameters durchgeführt wird, wenn ein solcher vorhanden ist, insbesondere zusätzliches Erfassen von Infrarot-Bilddaten mittels Infrarot-Scannens der Abschnitte der in der Liste eingetragenen Prozessierdatensätze, wenn sich aus dem gegebenenfalls zusätzlich vorhandenen mindestens einen Scanparameter bei mindestens einer Vorlage in dem jeweiligen Abschnitt ergibt, dass ein zusätzlicher Infrarotscan benötigt wird, und/oder zusätzliches Erfassen von Multi-Exposure- Bilddaten mittels Multi-Exposure-Scannens der Abschnitte der in der Liste eingetragenen Prozessierdatensätze, wenn sich aus dem gegebenenfalls zusätzlich vorhandenen mindestens einen Scanparameter bei mindestens einer Vorlage in dem jeweiligen Abschnitt ergibt, dass ein zusätzlicher Multi-Exposure-Scan benötigt wird. Auf diese Weise lassen sich in den weiteren Arbeitsschritten des Verfahrens die bspw. von einem Benutzer gewünschten Filter anwenden, wenn diese bspw. Bilddaten eines Infrarotscans oder mittels Multi-Exposure-Scans benötigen.

Eine Ausführungsform der Erfindung zeichnet sich dadurch aus, dass beim Ausschneiden der Vorlagenbilddaten aus den gescannten Bilddaten gemäß Schritt (viii) entsprechende Vorlagenbilddaten auch aus den gegebenenfalls zusätzlich vorhandenen Infrarot- und/oder Multi-Exposure-Bilddaten ausgeschnitten werden, wenn der mindestens eine gegebenenfalls vorhandene zusätzliche Scanparameter des entsprechenden Scanrahmens dieser Vorlagen einen zusätzlichen Infrarot-Scan bzw. einen zusätzlichen Multi-Exposure-Scan und die jeweils zugehörigen Bilddaten der Vorlage benötigt. Auf diese Weise lassen sich in den weiteren Arbeitsschritten des Verfahrens die bspw. von einem Benutzer für eine bestimmte Vorlage gewünschten Filter anwenden, wenn diese bspw. Bilddaten eines Infrarotscans oder mittels Multi-Exposure-Scans benötigen.

Eine Ausführungsform der Erfindung zeichnet sich aus durch die Schritte des Aufsetzens einer Filter-Pipeline aus den gemäß Schritt (viii) ausgeschnittenen Vorlagenbilddaten, und gegebenenfalls aus den zusätzlich aus einem zusätzlich durchgeführten Infrarot- und/oder Multi-Exposure-Scan gewonnenen Vorlagenbilddaten, zusammen mit dem zu jeder der Vorlagenbilddaten gegebenenfalls vorhandenen mindestens einen Scanparameter, wie etwa einer gewünschten Auflösung beim Erfassen der Bilddaten, Metadaten der Vorlagen wie bspw. ein Datum oder Name der Vorlagen, gewünschte Filter und deren Einstellungen oder gewünschte Multi-Exposure-Scan, des Abarbeitens der Filter-Pipeline mit diesen Vorlagenbilddaten, und des Durchführens der beiden vorgenannten Schritte des Aufsetzens und Abarbeitens bis alle ausgeschnittenen Vorlagenbilddaten anhand ihres gegebenenfalls zusätzlich mindestens einen vorhandenen Scanparameters prozessiert worden sind.

Weitere Ausführungsformen der Erfindung sind in den Unteransprüchen angegeben.

Ausführungsformen der Erfindung werden nun anhand der Zeichnung beschrieben. Gleiche bzw. funktionsgleiche Teile sind mit denselben Bezugszeichen bezeichnet. Die Figuren zeigen:
- Figur 1: zur Illustration einer Ausführungsform des erfindungsgemäßen Verfahrens eine schematische Darstellung eines Ergebnisses eines Vorab-Scans von auf einem Flachbett eines nicht weiter dargestellten Flachbettscanners verteilten Vorlagen;
- Figur 2: eine schematische Darstellung eines Zwischenergebnisses einer Ausführungsform des erfindungsgemäßen Verfahrens;
- Figur 3: eine schematische Darstellung eines Zwischenergebnisses einer Ausführungsform des erfindungsgemäßen Verfahrens;
- Figur 4: eine schematische Darstellung eines Zwischenergebnisses einer Ausführungsform des erfindungsgemäßen Verfahrens; und
- Figur 5: einen zur Illustration vereinfacht dargestellten schematischen Ablauf gemäß einem Ausführungsbeispiel des erfindungsgemäßen Verfahrens.

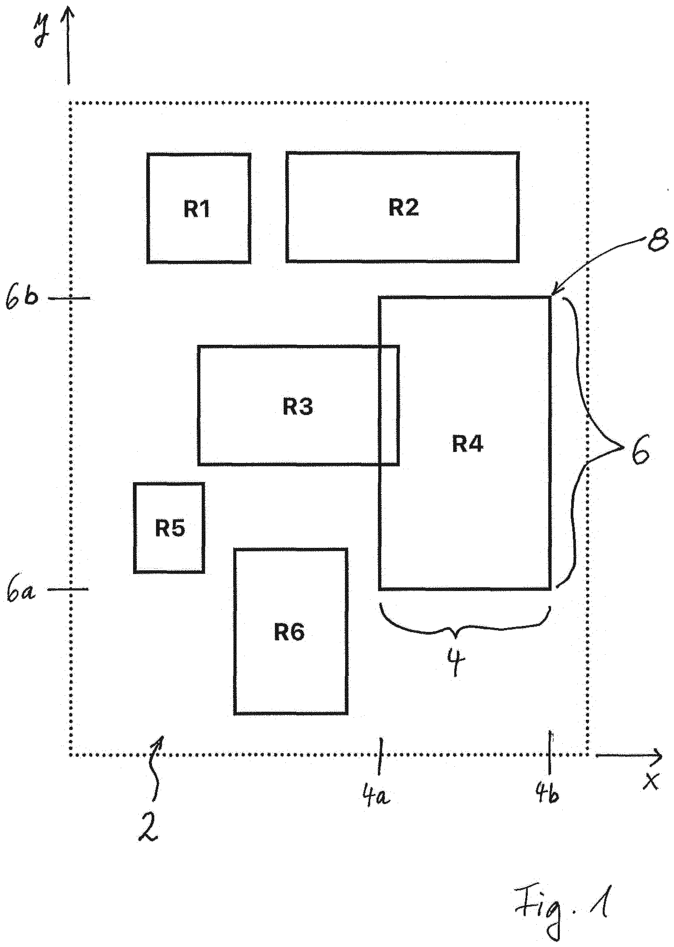

Figur 1 zeigt, zur Illustration einer Ausführungsform des erfindungsgemäßen Verfahrens zum Scannen von Vorlagen unter Verwendung eines Scanners, eine schematische Darstellung eines Ergebnisses eines Vorab-Scans von auf einem Flachbett 2 eines nur dadurch schematisch angedeuteten, jedoch sonst nicht weiter dargestellten Flachbettscanners verteilten, nicht dargestellten Vorlagen, wie bspw. Dias, und eines Erstellens von zugehörigen Scanrahmen R1, R2, R3, R4, R5 und R6.

Die anhand und zu den Vorlagen erzeugten Scanrahmen, im folgenden auch Scanrahmen R1, R2, R3, R4, R5 und R6 genannt, sind in der Figur 1 und auch in allen folgenden Figuren als schwarze Rechtecke dargestellt. Die eigentlichen Bilddaten der Vorlagen befinden sich innerhalb der Scanrahmen und sind in den Figuren zur Vereinfachung nicht als Bilder, Text, Foto oder dergleichen sondern nur als weisse Fläche dargestellt. Selbstverständlich können die innerhalb des Scanrahmens R1, R2, R3, R4, R5 und R6 liegenden Vorlagen jedoch jede Art von Text und/oder Bild enthalten.

Der Vorab-Scan wurde unter Verwendung des eine, bevorzugt zweidimensionale, Ausdehnung in x- und in y-Richtung aufweisenden, als Flachbett 2 ausgebildeten Scanbetts des Scanners zur Erfassung jeweils einer x-Erstreckung 4 zwischen einem kleinsten Erstreckungswert 4a und einem größten Erstreckungswert 4b in x-Richtung und zur Erfassung jeweils einer y-Erstreckung 6 zwischen einem kleinsten Erstreckungswert 6a und einem größten Erstreckungswert 6b in y-Richtung der auf dem Flachbett 2 befindlichen Vorlagen durchgeführt. Anschließend findet ein Erstellen von den Vorlagen zugeordneten, bevorzugt rechteckigen, Scanrahmen R1, R2, R3, R4, R5, R6 aus den jeweils erfassten Erstreckungswerten statt. Die x- und die y-Richtung sind in Figur 1 nur zu Illustrationszwecken dargestellt, gehören also nicht zum Scanbild des Vorab-Scans.

Am Beispiel des Scanrahmens R4 seien die Erstreckungen in x- und in y-Richtung erläutert. In Figur 1 weißt der Scanrahmen R4 eine x-Erstreckung 4 in x-Richtung und einen y-Erstreckung 6 in y-Richtung auf. Der x-y-Positionswert 8 weißt somit den größten Erstreckungswert 4b in x-Richtung und den größten Erstreckungswert 6b in y-Richtung auf. Entsprechendes gilt für die übrigen Scanrahmen R1, R2, R3, R5 und R6 auf dem Flachbett 2.

Somit hat das Verfahren jeder Vorlage einen Scanrahmen R1, R2, R3, R4, R5 und R6 mit seinen jeweiligen Erstreckungswerten 4a und 4b in x-Richtung und in 6a und 6b in y-Richtung und mit seinen jeweiligen x- und y-Erstreckungen 4 bzw. 6 im Rahmen des Vorab-Scans erstellt.

Optional wird zu mindestens einem der Scanrahmen R1, R2, R3, R5 und R6, zusätzlich zu den Erstreckungswerten in x- und in y-Richtung und den x-y-Erstreckungen, mindestens ein weiterer Scanparameter erfasst oder, bspw. von einem Benutzer des Verfahrens, festgelegt. Bei dem zusätzlich mindestens einen Scanparameter kann es sich um die gewünschte Auflösung beim Erfassen der Bilddaten, um Metadaten der Vorlage wie bspw. ein Datum oder Name der Vorlage, um Filter und deren Einstellungen, und/oder dem Anfordern eines Multi-Exposure-Scans handeln. Multi-Exposure ist ein Exposure-Blending-Verfahren, das beim Digitalisieren von Durchsichtvorlagen wie Dias oder Filmstreifen per Scanner verwendet werden kann, um Bildrauschen zu beseitigen und um den effektiven Dynamikumfang des verwendeten Scanners zu erhöhen. Multi-Exposure setzt dazu eine von der Anmelderin entwickelte Auto-Alignment-Technologie zum automatischen exakten Ausrichten von Mehrfach-Scans und zur Beseitigung von Bildrauschen ein.

Anschließend wird in einem Schritt (ii) der Scanrahmen mit der größten y-Erstreckung als Leitrahmen festgelegt. In dem dargestellten Beispiel ist der Scanrahmen R4 der Leitrahmen.

Optional kann zur Festlegung des Leitrahmens eine nach dem Ausmaß der y-Erstreckung sortierte Höhenliste der erfassten Scanrahmen R1, R2, R3, R4, R5 und R6 erstellt werden. Dabei kann optional zur Erstellung der Höhenliste ein Sortieralgorithmus verwendet werden, der jeweils pärchenweise die y-Erstreckungen weierScanrahmen R1, R2, R3, R4, R5 und R6 vergleicht.

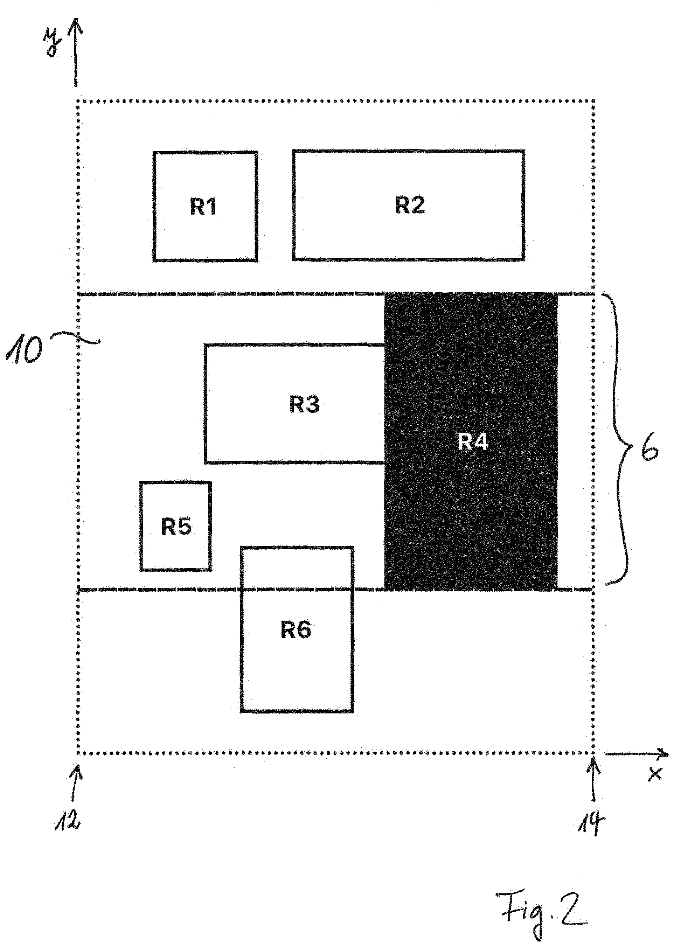

Wie in Figur 2 schematisch dargestellt ist, wird in einem bevorzugten Zwischenschritt anhand des Leitrahmens R4 ein Abschnitt 10 in y-Richtung durch den kleinsten y-Wert 6a und den größten y-Wert 6b der y-Erstreckung des Leitrahmens R4, also durch die y-Erstreckung 6 des Leitrahmens R4, aufgespannt. In x-Richtung ist der Abschnitt 10 bevorzugt durch die (Scan-)Grenzen 12 und 14 des Flachbetts 2 in x-Richtung begrenzt. Bevorzugt werden die Bilddaten aller Scanrahmen R1-R6 in einem Abschnitt 10 mit derselben Auflösung erfasst.

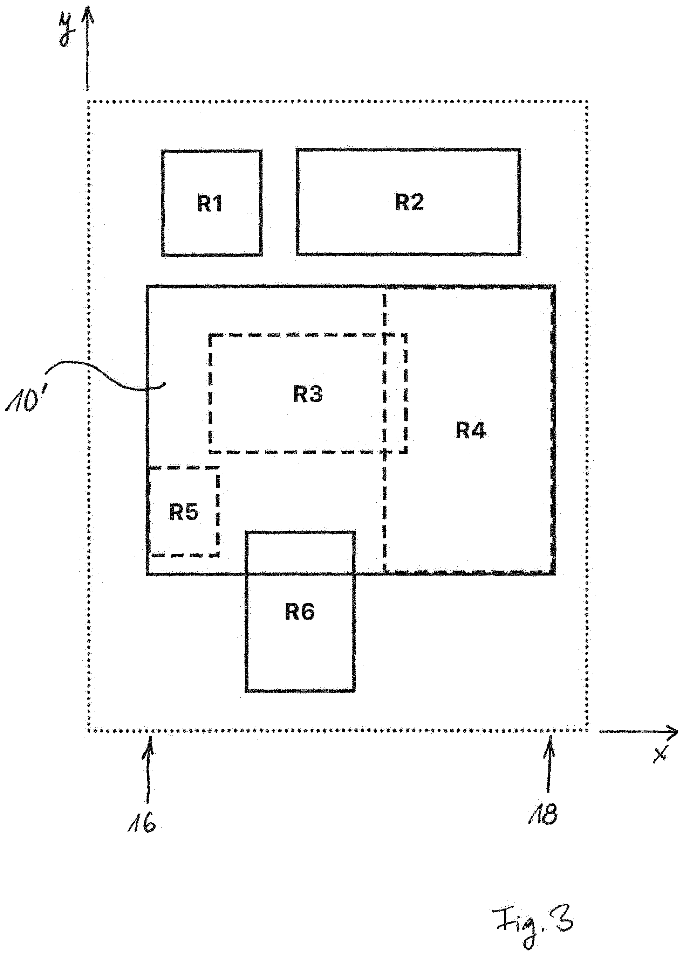

Eine andere Vorgehensweise beim Aufspannen des Abschnittes 10' zeigt im Ergebnis die Figur 3. Hier erfolgt ein Begrenzen des Abschnittes 10' in x-Richtung, indem unter den im Abschnitt 10' befindlichen Leitrahmen R4 und den Folgerahmen R3 und R5 der kleinste x-Wert 16 und der größte x-Wert 18 der Erstreckungswerte in x-Richtung erfasst wird und der Abschnitt 10' in x-Richtung nur zwischen diesen beiden Werten 16 und 18 aufgespannt wird.

Anschließend werden in einem Schritt (iii) als Folgerahmen diejenigen Scanrahmen definiert, die sich mit ihrer y-Erstreckung zumindest teilweise, bevorzugt überwiegend, weiter bevorzugt ganz, innerhalb des durch die y-Erstreckung 6 des Leitrahmens R4 aufgespannten Abschnittes 10 befinden. In dem in den Figuren 1 und 2 dargestellten Ausführungsbeispiel sind dies die Scanrahmen R3 und R5.

Anschließend wird in einem Schritt (iv) ein Prozessierdatensatz aus dem Abschnitt 10, seinem Leitrahmen R4 und seinen Folgerahmen R3 und R5 erstellt und bevorzugt gespeichert, jeweils bevorzugt zusammen mit den jeweiligen Erstreckungswerten 4a, 4b, 6a, 6b des Leitrahmens R4 und mit den jeweiligen Erstreckungswerten der Folgerahmen R3 und R5.

Dieser Prozessierdatensatz wird in einem Schritt (v) in eine Liste von Prozessierdatensätzen eingetragen.

Die Schritte (ii) bis (v) werden, jeweils ohne Berücksichtigung der bereits in einem Prozessierdatensatz befindlichen Scanrahmen, wiederholt durchgeführt, bis sich alle im Vorab-Scan erfassten Scanrahmen R1, R2, R3, R4, R5 und R6 in einem Prozessierdatensatz befinden,

Anschließend erfolgt ein Erfassen von Bilddaten durch Scannen der Abschnitte der in der Liste eingetragenen Prozessierdatensätze unter Verwendung des Flachbettscanners. Bevorzugt wird das Scannen als Farb-Scannen im RGB-Raum durchgeführt.

Optional wird dieses Scannen gegebenenfalls unter Berücksichtigung des mindestens einen zusätzlichen Scanparameters durchgeführt wird, wenn ein solcher im Rahmen der oben erwähnten optionalen Erfassung mindestens einen zusätzlichen Scanparameters vorhanden ist. Dabei erfolgt bevorzugt ein zusätzliches Erfassen von Infrarot-Bilddaten mittels Infrarotscannens der Abschnitte der in der Liste eingetragenen Prozessierdatensätze, wenn sich aus dem gegebenenfalls zusätzlich vorhandenen mindestens einen Scanparameter bei mindestens einem Scanrahmen R1, R2, R3, R4, R5 und R6 in dem jeweiligen Abschnitt ergibt, dass ein zusätzlicher Infrarotscan benötigt wird. Alternativ oder zusätzlich erfolgt dabei bevorzugt ein zusätzliches Erfassen von Multi-Exposure-Bilddaten mittels Multi-Exposure-Scannens der Abschnitte der in der Liste eingetragenen Prozessierdatensätze, wenn sich aus dem gegebenenfalls zusätzlich vorhandenen mindestens einen Scanparameter bei mindestens einem Scanrahmen R1, R2, R3, R4, R5 und R6 in dem jeweiligen Abschnitt ergibt, dass ein zusätzlicher Multi-Exposure-Scan benötigt wird.

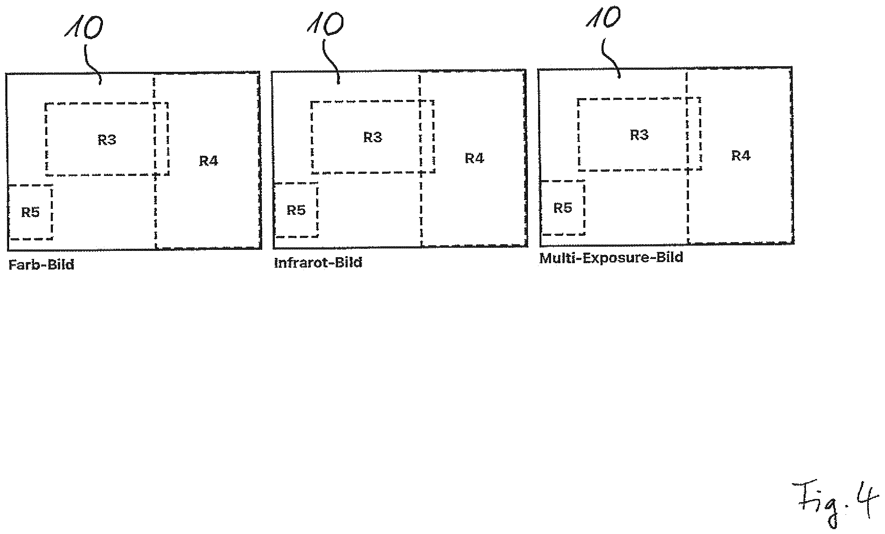

Diese Option ist schematisch in Figur 4 dargestellt. Diese zeigt von links nach rechts und jeweils nur anhand der Leitrahmens R4 und der Folgerahmen R3 und R5 symbolisiertes Farb-Bild auf der Basis eines Farb-Scans des Abschnitts 10, ein Infrarot-Bild auf der Basis eines Infrarot-Scans des Abschnitts 10 und ein Multi-Exposure-Bild auf der Basis eines Multi-Exposure-Scans des Abschnitts 10.

Anschließend erfolgt ein Ausschneiden der Vorlagenbilddaten aus den erfassten Bilddaten entlang der Scanrahmen R1, R2, R3, R4, R5 und R6 unter Verwendung ihrer zugehörigen, in dem jeweiligen Prozessierdatensatz gespeicherten Erstreckungswerte der Scanrahmen R1, R2, R3, R4, R5 und R6.

Optional werden bei diesem Ausschneiden der Vorlagenbilddaten aus den gescannten Bilddaten die entsprechenden Vorlagenbilddaten auch aus den gegebenenfalls zusätzlich vorhandenen Infrarot- und/oder Multi-Exposure-Bilddaten der Infrarot- und/oder Multi-Exposure-Scans ausgeschnitten, wenn ein solcher mindestens einer zusätzlicher Scanparameter im Zuge der oben erwähnten optionalen Erfassung vorhanden ist, und der mindestens eine gegebenenfalls vorhandene zusätzliche Scanparameter des entsprechenden Scanrahmens R1, R2, R3, R4, R5 und R6 dieser Vorlage zusätzliche Infrarot-Bilddaten bzw. Multi-Exposure-Bilddaten benötigt.

Dann erfolgt ein Speichern der ausgeschnittenen Vorlagenbilddaten.

Optional kann noch ein Aufsetzen einer Filter-Pipeline erfolgen. Diese Filter-Pipeline wird aus den ausgeschnittenen Vorlagenbilddaten, und gegebenenfalls aus den zusätzlich aus einem zusätzlich durchgeführten Infrarot- und/oder Multi-Exposure-Scan gewonnenen Infrarot- bzw..Multi-Exposure-Vorlagenbilddaten, zusammen mit dem zu jeder Vorlage gegebenenfalls vorhandenen mindestens einen Scanparameter, wie etwa gewünschte Auflösung beim Erfassen der Bilddaten, Metadaten der Vorlage wie bspw. ein Datum oder Name der Vorlage, gewünschte Filter und deren Einstellungen oder gewünschters Multi-Exposure-Scan aufgesetzt. Dann wird diese Filter-Pipeline mit dieser Vorlage abgearbeitet. Das Durchführen dieser beiden vorgenannten Schritte des Aufsetzens und Abarbeitens der Filterpipeline wird widerholt durchgeführt, bis alle ausgeschnittenen Vorlagenbilddaten anhand ihres gegebenenfalls zusätzlich mindestens einen vorhandenen Scanparameters prozessiert worden sind.

Abschließend können auch diese fertig prozessierten Vorlagenbilddaten gespeichert werden.

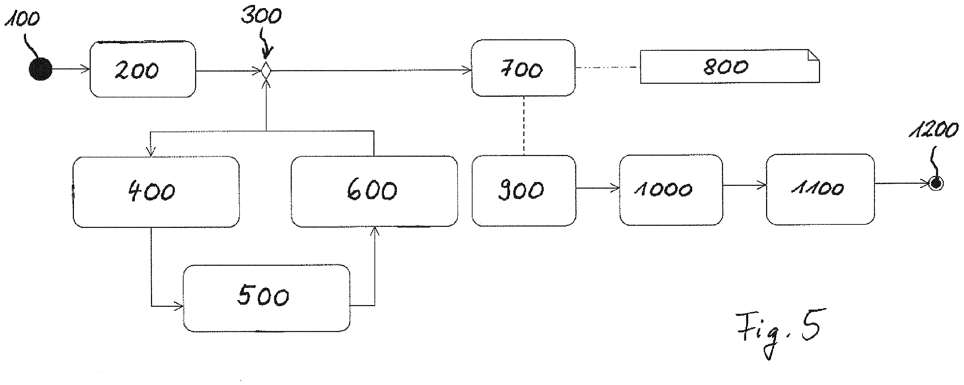

Figur 5 zeigt einen, einer bevorzugten Variante des Vorstehenden entsprechenden, zur Illustration vereinfacht dargestellten schematischen Ablauf gemäß einem Ausführungsbeispiel des erfindungsgemäßen Verfahrens.

Der links gezeigte Schritt 100 der Figur 5 symbolisiert den Abschluß des Vorab-Scans gemäß Schritt (i) des Verfahrens. Schritt 200 symbolisiert das Erstellen einer nach dem Ausmaß der y-Erstreckung sortierten Höhenliste gemäß Schritt (ii) des Verfahrens der im Vorab-Scan des Schrittes (i) erfassten Scanrahmen R1-R6. An der Raute 300 wird entschieden, ob die in der Höhenliste verbliebene Zahl an Scanrahmen R1-R6 größer Null ist. Ist dies der Fall, werden im Schritt 400 alle Scanrahmen R1-R6 gemäß Schritt (iii) des Verfahrens als Folgerahmen definiert, deren y-Erstreckung kleiner oder gleich ist als die des Scanrahmens R1-R6 mit der größten y-Erstreckung, des Leitrahmens. Aus letzterem und den Folgerahmen wird dann in Schritt 500 gemäß Schritt (iv) des Verfahrens ein Prozessierdatensatz erstellt und dieser gemäß Schritt (v) des Verfahrens in eine Liste von Prozessierdatensätzen eingetragen. Im Schritt 600 werden dann Leitrahmen und Folgerahmen dieses Prozessierdatensatzes aus der Höheliste gelöscht. Ist dann an der Entscheidungsraute 300 die dann noch in der Höhenliste verbliebene Zahl an Scanrahmen weiterhin größer Null, dann beginnen gemäß Schritt (vi) des Verfahrens die Schritte 400 bis 600 erneut mit den noch verbliebenen Scanrahmen.

Ist dann irgendwann an der Entscheidungsraute 300 die dann noch in der Höhenliste verbliebene Zahl an Scanrahmen gleich Null, dann werden durch Scannen 700 mittels eines Scanners 800 die Bilddaten der Abschnitte 10 der in der Liste von Prozessierdatensätzen eingetragenen Prozessierdatensätze gemäß Schritt (vii) des Verfahrens erfasst.

Anschließend werden gemäß Schritt (viii) des Verfahrens im Schritt 900 Vorlagenbilddaten aus den erfassten Bilddaten entlang der Scanrahmen R1, R2, R3, R4, R5, R6 augeschnitten.

In dem Schritt 1000 wird eine Filterpipeline aufgesetzt und im Schritt 1100 abgearbeitet, wie es oben beschrieben ist. Schließlich wird die ausgeschnittenen und in der Filterpipeline fertig prozessierten Vorlagenbilddaten im Schritt 1200 gemäß Schritt (ix) des Verfahrens gespeichert.

## Patentansprüche

1. Verfahren zum Scannen von Vorlagen unter Verwendung eines Scanners, bspw. eines Flachbettscanners, mit den Schritten:
(i) Durchführen eines Vorab-Scans unter Verwendung eines eine Ausdehnung in x- und in y-Richtung aufweisenden Scanbetts (2) des Scanners, zur Erfassung jeweils einerx-Erstreckung (4) zwischen einem kleinsten (4a) und einem größten Erstreckungswert (4b) in x-Richtung und zur Erfassung jeweils einer y-Erstreckung (6) zwischen einem kleinsten (6a) und einem größten Erstreckungswert (6b) in y-Richtung von auf dem Scanbett (2) befindlichen Vorlagen, und Erstellen von den Vorlagen zugeordneten, bevorzugt rechteckigen, Scanrahmen (R1, R2, R3, R4, R5, R6) aus den jeweils erfassten Erstreckungswerten,
(ii) Festlegen des Scanrahmens (R1, R2, R3, R4, R5, R6) mit der größten y-Erstreckung (6) als Leitrahmen (R4),
(iii) Definieren derjenigen Scanrahmen (R1, R2, R3, R4, R5, R6) als Folgerahmen (R3, R5), die sich mit ihrer y-Erstreckung zumindest teilweise, bevorzugt überwiegend, weiter bevorzugt ganz, innerhalb eines Abschnittes (10) des Scanbetts (2) befinden, welcher Abschnitt (10) in y-Richtung durch den kleinsten und den größten Erstreckungswert der y-Erstreckung (6) des Leitrahmens (R4) aufgespannt wird,
(iv) Erstellen eines Prozessierdatensatzes aus dem Abschnitt (10), seinem Leitrahmen (R4) und seinen Folgerahmen (R3, R5),
(v) Eintragen dieses Prozessierdatensatzes in eine Liste von Prozessierdatensätzen,
(vi) Durchführen der Schritte (ii) bis (v), ohne Berücksichtigung der bereits in einem Prozessierdatensatz befindlichen Scanrahmen (R1, R2, R3, R4, R5, R6), bis sich alle im Schritt (i) erfassten Scanrahmen (R1, R2, R3, R4, R5, R6) in einem Prozessierdatensatz befinden,
(vii) Erfassen von Bilddaten durch Scannen der Abschnitte (10) der in der Liste eingetragenen Prozessierdatensätze,
(viii) Ausschneiden von Vorlagenbilddaten aus den erfassten Bilddaten entlang der Scanrahmen (R1, R2, R3, R4, R5, R6), und
(ix) Speichern der ausgeschnittenen Vorlagenbilddaten.

2. Verfahren nach Anspruch 1,
wobei zur Festlegung des Leitrahmens (R4) gemäß Schritt (ii) eine nach einem Ausmaß der y-Erstreckung (6) sortierte Höhenliste der in Schritt (i) erfassten Scanrahmen (R1, R2, R3, R4, R5, R6) erstellt wird, wobei bevorzugt zur Erstellung der Höhenliste ein Sortieralgorithmus verwendet wird, der jeweils pärchenweise die y-Erstreckungen (6) zweier Scanrahmen (R1, R2, R3, R4, R5, R6) vergleicht..

3. Verfahren nach einem der vorstehenden Ansprüche, mit dem Schritt:
Begrenzen des Abschnittes (10) in x-Richtung durch Grenzen (12, 14) des Scanbetts (2) in x-Richtung.

4. Verfahren nach einem der vorstehenden Ansprüche, mit dem Schritt:
Begrenzen des Abschnittes (10) in x-Richtung, in dem unter dem Leitrahmen (R4) und den im Abschnitt (10') befindlichen Folgerahmen (R3, R5) der kleinste x-Wert (16) und der größte x-Wert (18) der Erstreckungswerte in x-Richtung erfasst wird und der Abschnitt (10') in x-Richtung nur zwischen diesen beiden Werten (16, 18) aufgespannt wird.

5. Verfahren nach einem der vorstehenden Ansprüche,
wobei zu mindestens einem der Scanrahmen (R1, R2, R3, R4, R5, R6) zusätzlich mindestens ein weiterer Scanparameter erfasst oder, bspw. von einem Benutzer des Verfahrens, festgelegt wird, wobei es sich bei dem zusätzlich mindestens einen Scanparameter um eine gewünschte Auflösung beim Erfassen der Bilddaten, um Metadaten der Vorlagen wie bspw. ein Datum oder Name der Vorlagen, um Filter und deren Einstellungen, und/oder dem Anfordern eines Multi-Exposure-Scans handeln kann.

6. Verfahren nach einem der vorstehenden Ansprüche,
wobei das Scannen gemäß Schritt (vii) als Farb-Scannen durchgeführt wird.

7. Verfahren nach einem der vorstehenden Ansprüche,
wobei das Scannen gemäß Schritt (vii) gegebenenfalls unter Berücksichtigung des mindestens einen zusätzlichen Scanparameters durchgeführt wird, wenn ein solcher vorhanden ist, insbesondere zusätzliches Erfassen von Infrarot-Vorlagenbilddaten mittels Infrarotscannens der Abschnitte (10) der in der Liste eingetragenen Prozessierdatensätze, wenn sich aus dem gegebenenfalls zusätzlich vorhandenen mindestens einen Scanparameter bei mindestens einem Scanrahmen (R1, R2, R3, R4, R5, R6) in dem jeweiligen Abschnitt (10) ergibt, dass ein zusätzlicher Infrarot-Scan benötigt wird, und/oder zusätzliches Erfassen von Multi-Exposure-Vorlagenbilddaten mittels Multi-Exposure-Scannens der Abschnitte (10) der in der Liste eingetragenen Prozessierdatensätze, wenn sich aus dem gegebenenfalls zusätzlich vorhandenen mindestens einen Scanparameter bei mindestens einem Scanrahmen (R1, R2, R3, R4, R5, R6) in dem jeweiligen Abschnitt (10) ergibt, dass ein zusätzlicher Multi-Exposure-Scan benötigt wird.

8. Verfahren nach dem vorstehenden Anspruch,
wobei beim Ausschneiden der Vorlagenbilddaten aus den gescannten Bilddaten gemäß Schritt (viii) entsprechende Vorlagenbilddaten auch aus den gegebenenfalls zusätzlich vorhandenen Infrarot-Vorlagenbilddaten und/oder Multi-Exposure-Vorlagenbilddaten ausgeschnitten werden, wenn der mindestens eine gegebenenfalls vorhandene zusätzliche Scanparameter des entsprechenden Scanrahmens (R1, R2, R3, R4, R5, R6) dieser Vorlage zusätzliche Infrarot-Vorlagenbilddaten bzw. Multi-Exposure-Vorlagenbilddaten der Vorlage verlangt.

9. Verfahren nach einem der vorstehenden Ansprüche, mit den Schritten:
Aufsetzen einer Filter-Pipeline aus den gemäß Schritt (viii) ausgeschnittenen Vorlagenbilddaten, und gegebenenfalls aus den zusätzlich aus einem zusätzlich durchgeführten Infrarot- und/oder Multi-Exposure-Scan gewonnenen Infrarot-Vorlagenbilddaten und/oder Multi-Exposure-Vorlagenbilddaten, zusammen mit dem zu jeder der Vorlagenbilddaten gegebenenfalls vorhandenen mindestens einen Scanparameter, wie etwa einer gewünschten Auflösung beim Erfassen der Bilddaten, Metadaten der Vorlagen wie bspw. ein Datum oder Name der Vorlagen, gewünschte Filter und deren Einstellungen oder gewünschte Multi-Exposure-Scans,
Abarbeiten der Filter-Pipeline mit diesen Vorlagenbilddaten, und
Durchführen der beiden vorgenannten Schritte Aufsetzen und Abarbeiten bis alle ausgeschnittenen Vorlagenbilddaten anhand ihres gegebenenfalls zusätzlich mindestens einen vorhandenen Scanparameters prozessiert worden sind.

10. Computerprogramm mit Programmcodemitteln zum Ausführen der Schritte nach einem der vorstehenden Ansprüche, wenn das Computerprogramm auf einem Computer ausgeführt wird.

11. Computerlesbares Medium mit einem Computerprogramm nach dem vorstehenden Anspruch.

12. Scanner, umfassend Mittel, insbesondere ein Computerprogramm nach Anspruch 10 oder ein computerlesbares Medium nach Anspruch 11, um ein Verfahren nach einem der Ansprüche 1-9 auszuführen.

## Claims

1. A method for scanning originals using a scanner, for example a flatbed scanner, said method comprising the steps of:
(i) performing a pre-scan using a scanner bed (2) of the scanner, said scanner bed (2) having an extension in the x-direction and in the y-direction, in order to measure an x-extension (4) between a smallest (4a) and a largest extension value (4b) in the x-direction and to measure a y-extension (6) between a smallest (6a) and a largest extension value (6b) in the y-direction in respect of each of the originals on the scanner bed (2), and creating preferably rectangular scanning frames (R1, R2, R3, R4, R5, R6) associated with the originals from the respectively measured extension values,
(ii) specifying the scanning frame (R1, R2, R3, R4, R5, R6) with the largest y-extension (6) as the leading frame (R4),
(iii) defining as subsequent frames (R3, R5) those scanning frames (R1, R2, R3, R4, R5, R6) which are located with their y-extension at least partially, preferably predominantly, further preferably entirely within a section (10) of the scanning bed (2) which is spanned in the y-direction by the smallest and the largest extension value of the y-extension (6) of the leading frame (R4),
(iv) creating an image processing dataset from said section (10), its leading frame (R4) and its subsequent frames (R3, R5),
(v) registering said image processing dataset in a list of image processing datasets,
(vi) performing steps (ii) to (v), without taking into account the scanning frames (R1, R2, R3, R4, R5, R6) already existing in an image processing dataset, until all the scanning frames (R1, R2, R3, R4, R5, R6) measured in step (i) are included in an image processing dataset,
(vii) capturing image data by scanning the sections (10) of the image processing datasets registered in the list,
(viii) cropping the image data of originals from the captured image data along the scanning frames (R1, R2, R3, R4, R5, R6), and
(ix) storing the cropped image data of the originals.

2. The method according to claim 1,
wherein, in order to specify the leading frame (R4) in accordance with step (ii), a height list of the scanning frames (R1, R2, R3, R4, R5, R6) measured in step (i), sorted according to the magnitude of the y-extension, is created, wherein a sorting algorithm is preferably used which compares respective pairs of the y-extensions (6) of two scanning frames (R1, R2, R3, R4, R5, R6).

3. The method according to any one of the preceding claims, further comprising the step of:
delimiting the section (10) in the x-direction by boundaries (12, 14) of the scanner bed (2) in the x-direction.

4. The method according to any one of the preceding claims, further comprising the step of:
delimiting the section (10) in the x-direction by measuring the smallest x-value (16) and the largest x-value (18) of the extension values in the x-direction among the leading frame (R4) and the subsequent frames (R3, R5) in the section (10'), and the section (10') is spanned in the x-direction between said two values (16, 18) only.

5. The method according to any one of the preceding claims,
wherein, for at least one of the scanning frames (R1, R2, R3, R4, R5, R6), at least one further scanning parameter is additionally measured, or is stipulated, for example by a user, wherein the at least one additional scanning parameter may be a desired resolution when capturing the image data, or metadata of the originals, such as a date or a name of the originals, or filters and their settings, and/or a request for a multi-exposure scan.

6. The method according to any one of the preceding claims,
wherein the scanning in accordance with step (vii) is performed as colour scanning.

7. The method according to any one of the preceding claims,
wherein the scanning in accordance with step (vii) is performed, taking into account the at least one additional scanning parameter if one exists, in particular by additionally capturing infrared image data of originals by infrared scanning of the sections of the image processing datasets registered in the list, if it is evident from the at least one scanning parameter that may additionally be present for at least one scanning frame (R1, R2, R3, R4, R5, R6) in the respective section (10) that an additional infrared scan is needed, and/or by additional capturing of multi-exposure image data of originals by multi-exposure scanning of the sections (10) of the image processing datasets registered in the list, if it is evident from the at least one scanning parameter that may additionally be present for at least one scanning frame (R1, R2, R3, R4, R5, R6) in the respective section (10) that an additional multi-exposure scan is needed.

8. The method according to the preceding claim,
wherein, when cropping the image data of originals from the scanned image data in accordance with step (viii), respective image data of originals are also cropped from any infrared image data of originals and/or any multi-exposure image data of originals that may additionally be available, if the at least one scanning parameter that may additionally be present for the respective scanning frame (R1, R2, R3, R4, R5, R6) of said original requires additional infrared image data of said original and/or multi-exposure image data of said original.

9. The method according to any one of the preceding claims, comprising the steps of:
setting up a filter pipeline from the image data of originals cropped in accordance with step (viii), and where applicable from the infrared image data of originals and/or multi-exposure image data of originals captured by an additionally performed infrared and/or multi-exposure scan, combined with the at least one scanning parameter that may be available for each of the image data of originals, such as a desired resolution when capturing the image data, metadata of the originals such as a date or name of the originals, desired filters and their settings, or desired multi-exposure scans,
processing the filter pipeline using said image data of originals, and
performing the two aforementioned steps of setting up and processing until all the cropped image data of originals have been processed on the basis of their additional at least one scanning parameter, where applicable.

10. A computer program comprising program code means for performing the steps according to one of the preceding claims when the computer program is run on a computer.

11. A computer readable medium comprising a computer program according to the preceding claim.

12. A scanner comprising means, in particular a computer program according to claim 10 or a computer-readable medium according to claim 11, to perform a method according to any one of claims 1 to 9.

## Revendications

1. Procédé de numérisation de documents en utilisant un scanner, par exemple un scanner à lit plat, avec les étapes suivantes :
(i) la réalisation d'une numérisation préalable en utilisant un lit de numérisation (2) présentant une étendue dans la direction x et dans la direction y du scanner, pour la détection respectivement d'une étendue x (4) entre une valeur d'étendue la plus petite (4a) et une valeur d'étendue la plus grande (4b) dans la direction x et pour la détection respectivement d'une étendue y (6) entre une valeur d'étendue la plus petite (6a) et une valeur d'étendue la plus grande (6b) dans la direction y de documents se trouvant sur le lit de numérisation (2), et l'établissement de cadres de numérisation (R1, R2, R3, R4, R5, R6) associés aux documents, de préférence rectangulaires, à partir des valeurs d'étendue détectées respectivement,
(ii) la fixation du cadre de numérisation (R1, R2, R3, R4, R5, R6) avec l'étendue y (6) la plus grande comme cadre de direction (R4),
(iii) la définition des cadres de numérisation (R1, R2, R3, R4, R5, R6) comme cadres séquentiels (R3, R5) qui se trouvent avec leur étendue y au moins partiellement, de préférence principalement, encore de préférence en totalité, dans une section (10) du lit de numérisation (2), laquelle section (10) est définie dans la direction y par la valeur d'étendue la plus petite et la valeur d'étendue la plus grande de l'étendue y (6) du cadre directeur (R4),
(iv) l'établissement d'un jeu de données de traitement à partir de la section (10), de son cadre directeur (R4) et de ses cadres séquentiels (R3, R5),
(v) l'inscription de ce jeu de données de traitement dans une liste de jeux de données de traitement,
(vi) la réalisation des étapes (ii) à (v) sans tenir compte des cadres de numérisation (R1, R2, R3, R4, R5, R6) se trouvant déjà dans un jeu de données de traitement jusqu'à ce que tous les cadres de numérisation (R1, R2, R3, R4, R5, R6) détectés dans l'étape (i) se trouvent dans un jeu de données de traitement,
(vii) la détection de données d'image par numérisation des sections (10) des jeux de données de traitement inscrits dans la liste,
(viii) la découpe des données d'image de document dans les données d'image détectées le long des cadres de numérisation (R1, R2, R3, R4, R5, R6), et
(ix) l'enregistrement des données d'image de document découpées.

2. Procédé selon la revendication 1,
dans lequel, pour la fixation du cadre directeur (R4) selon l'étape (ii), une liste de hauteur triée selon un niveau de l'étendue y (6) des cadres de numérisation (R1, R2, R3, R4, R5, R6) détectés dans l'étape (i) est établie, dans lequel, de préférence, pour l'établissement de la liste de hauteur, un algorithme de tri est utilisé, lequel compare respectivement par couple les étendues y (6) de deux cadres de numérisation (R1, R2, R3, R4, R5, R6).

3. Procédé selon l'une quelconque des revendications précédentes, avec l'étape suivante :
la délimitation de la section (10) dans la direction x par des limites (12, 14) du lit de numérisation (2) dans la direction x.

4. Procédé selon l'une quelconque des revendications précédentes, avec l'étape suivante :
la délimitation de la section (10) dans la direction x, dans lequel sous le cadre directeur (R4) et les cadres séquentiels (R3, R5) se trouvant dans la section (10'), la plus petite valeur x (16) et la plus grande valeur x (18) des valeurs d'étendue dans la direction x sont détectées et la section (10') est définie dans la direction x seulement entre ces deux valeurs (16, 18).

5. Procédé selon l'une quelconque des revendications précédentes,
dans lequel, pour au moins un des cadres de numérisation (R1, R2, R3, R4, R5, R6), en outre au moins un autre paramètre de numérisation est détecté ou est fixé par exemple par un utilisateur du procédé, dans lequel il peut s'agir, pour l'au moins un paramètre de numérisation en outre, d'une résolution souhaitée lors de la détection des données d'image, de métadonnées des documents comme par exemple une date ou un nom des documents, de filtres et leurs réglages, et/ou l'exigence d'une numérisation multiexposition.

6. Procédé selon l'une quelconque des revendications précédentes,
dans lequel la numérisation est réalisée, selon l'étape (vii), comme numérisation en couleur.

7. Procédé selon l'une quelconque des revendications précédentes,
dans lequel la numérisation est réalisée, selon l'étape (vii), éventuellement en tenant compte de l'au moins un paramètre de numérisation supplémentaire lorsqu'un tel paramètre est présent, en particulier une détection supplémentaire de données d'image de document à infrarouge au moyen de la numérisation à infrarouge des sections (10) des jeux de données de traitement inscrits dans la liste lorsqu'il résulte, à partir de l'au moins un paramètre de numérisation présent éventuellement en outre pour au moins un cadre de numérisation (R1, R2, R3, R4, R5, R6) dans la section (10) respective, qu'une numérisation à infrarouge supplémentaire est nécessaire, et/ou la détection supplémentaire de données d'image de document multiexposition au moyen de la numérisation multiexposition des sections (10) des jeux de données de traitement inscrits dans la liste, lorsqu'il résulte, à partir de l'au moins un paramètre de numérisation présent en outre éventuellement pour au moins un cadre de numérisation (R1, R2, R3, R4, R5, R6) dans la section (10) respective, qu'une numérisation multiexposition supplémentaire est nécessaire.

8. Procédé selon la revendication précédente,
dans lequel, lors de la découpe des données d'image de document dans les données d'image numérisées selon l'étape (viii), des données d'image de document correspondantes sont découpées aussi à partir des données d'image de document à infrarouge éventuellement présentes en outre et/ou données d'image de document multiexposition lorsque l'au moins un paramètre de numérisation supplémentaire éventuellement présent du cadre de numérisation (R1, R2, R3, R4, R5, R6) correspondant de ce document exige des données d'image de document à infrarouge supplémentaires ou données d'image de document multiexposition du document.

9. Procédé selon l'une quelconque des revendications précédentes, avec les étapes suivantes :
le placement d'un pipeline de filtre à partir des données d'image de document découpées selon l'étape (viii), et éventuellement à partir des données d'image de document à infrarouge et/ou données d'image de document multiexposition obtenues en outre à partir d'une numérisation à infrarouge et/ou multiexposition réalisée en outre, conjointement avec l'au moins un paramètre de numérisation présent éventuellement pour chacune des données d'image de document, comme par exemple une résolution souhaitée lors de la détection des données d'image, métadonnées des documents comme par exemple une date ou un nom des documents, des filtres souhaités et leurs réglages ou une numérisation multiexposition souhaitée,
l'exécution du pipeline de filtre avec ces données d'image de document, et
la réalisation des deux étapes précitées placement et exécution jusqu'à ce que toutes les données d'image de document découpées aient été traitées à l'aide de leur au moins un paramètre de numérisation présent éventuellement en outre.

10. Programme informatique avec des moyens de code de programme pour la réalisation des étapes selon l'une quelconque des revendications précédentes, lorsque le programme informatique est réalisé sur un ordinateur.

11. Support lisible sur ordinateur avec un programme informatique selon la revendication précédente.

12. Scanner comprenant des moyens, en particulier un programme informatique selon la revendication 10 ou un support lisible sur ordinateur selon la revendication 11, afin de réaliser un procédé selon l'une quelconque des revendications 1 à 9.
